# EUROPÄISCHE PATENTSCHRIFT

(11) **EP 2 809 981 B1**
(45) Veröffentlichungstag und Bekanntmachung des Hinweises auf die Patenterteilung: **24.01.2018**
(21) Anmeldenummer: 12705784.2
(22) Anmeldetag: 01.02.2012
(51) Int. Cl.: G01D 11/24, G01D 11/30, F16L 41/00, F16L 55/11

(54) **ELEMENT, VORZUGSWEISE EIN VERSCHLUSS-ELEMENT ZUM EINSETZEN IN EINE BOHRUNG EINES BAUTEILS**
ELEMENT, PREFERABLY A CLOSURE ELEMENT FOR INSERTING INTO A BORE IN A COMPONENT
ÉLÉMENT, DE PRÉFÉRENCE ÉLÉMENT DE FERMETURE À INSÉRER DANS L'ORIFICE D'UNE PIÈCE

(43) Veröffentlichungstag der Anmeldung: 10.12.2014
(73) Patentinhaber: SFC KOENIG AG, 8953 Dietikon (CH)
(72) Erfinder: KRAUER, Jürg, CH-8610 Uster (CH); HOLLINGER, Robert, CH-8332 Russikon (CH)
(74) Vertreter: Liebetanz, Michael
(86) Internationale Anmeldenummer: PCT/EP2012/000443
(87) Internationale Veröffentlichungsnummer: WO 2013/113327

(56) Entgegenhaltungen:
- DE-A1-102006 003 047
- US-A1- 2004 084 099
- US-A1- 2008 314 468

## Beschreibung

Die Erfindung betrifft ein Element, vorzugsweise ein Verschlusselement zum Einsetzen in eine Bohrung eines Bauteils nach dem Oberbegriff des Anspruchs 1.

Solche Verschluss- bzw. Befestigungselemente zum Einsetzen in eine Bohrung beispielsweise bei einem Motor mit einem in die Bohrung einsetzbaren hülsenförmigen Grundkörper sowie mit einem diesen in der Bohrung verspannbaren Spreizkörper sind bekannt. Verschlusselemente dieser Art werden insbesondere als Massenartikel in Bohrungen mit unterschiedlichen Durchmessern und Innendrücken zwecks Abdichten eingesetzt. Je nach Grösse der Bohrung und Stärke des wirksamen Innendrucks ergeben sich sehr unterschiedliche Ausführungen, wie diese beispielsweise in der US 6,708,978 B2 geoffenbart sind. Die dort beschriebenen Verschlüsse sind als einteilige Verschlussscheiben ausgebildet. Sie sind somit fertigungstechnisch einfacher als mehrteilige Verschlüsse herstellbar, wie diese beispielsweise in der Druckschrift WO 2009/000317 A1 beschrieben sind.

In der Druckschrift DE-A-10 2006 003047 ist eine Dichtungsanordnung geoffenbart, bei welcher eine mehrteilige Dichtung mit einer zylinderförmigen Dichtung und einem in diese eindrückbaren Stopfen vorgesehen sind, welche in dem in eine Bohrung eingedrückten Zustand durch eine wulstartige Verbindung einrastbar sind. Dabei kann der Stopfen hohl ausgebildet sein, um darin elektronische Bauteile aufzunehmen, bei denen es sich beispielsweise um einen Sensor, wie Drucksensor, handeln kann. Es fehlt eine konkrete Anordnung, wie und wo diese elektronischen Bauteile in dieser Innenbohrung in Längsrichtung des Stopfens aufgenommen werden.

Ein Unterschied bei dieser Dichtungsanordnung besteht darin, dass die gebildete innere Stufe bei dem Stopfen voraussetzt, dass bei einem Eindrücken der Dichtung mit dem radial vorstehenden Ringteil zwischen den Vertiefungen ein Auseinanderdrücken des Stopfens in seinem unteren Teil ausserhalb der Bohrung erfolgen muss. Dies kann eben nur dann ausgeführt werden, wenn sich dieser Stopfen mit dem unteren Ende ausserhalb der Bohrung befindet und sich damit radial ausdehnen kann.
Gemäss der Druckschrift US-A-2008/314468 ist ein Deckel bzw. eine Platte mit einem elektronischen oder magnetischen Sensor erläutert. Dieser Deckel bzw. diese Platte wird dabei am Ende eines Rohrs befestigt und dieser Sensor ist im Innern des Deckels bzw. der Platte eingelegt und darin gehalten. Nachteilig ist dabei, dass bei einer Bohrung eines Motors ein solches Aufdrücken des Deckels aussenseitig gar nicht möglich und damit diese Lösung ungeeignet ist.
Ausgehend von diesen bekannten Elementen liegt der Erfindung die Aufgabe zugrunde, ein Element zu schaffen, das auf einfache Weise mindestens eine zusätzliche Funktion einer Messung, einer Datenübertragung, einer Analyse und/oder dergleichen ausgeübt werden kann.

Die Aufgabe ist erfindungsgemäss dadurch gelöst, dass mindestens ein im oder am Element angeordnetes Elektroelement vorgesehen ist, wobei das jeweilige Elektroelement elektrische Signale sendet und/oder empfängt.

Mit diesem erfindungsgemässen Element können nebst der eigentlichen Dicht- und/oder Befestigungsfunktion eine oder mehrere Messungen etc. des Mediums in dem Bauteil und/oder vom Bauteil vorgenommen werden, ohne dass dabei das Montieren oder die sichere dauerhafte Abdichtung des Elementes beeinträchtigt würde.

Bei einer sehr vorteilhaften Ausführung ist das Elektroelement im Spreizkörper des Elementes integriert, wobei der Spreizkörper in einen in die Bohrung einsetzbaren hülsenförmigen Grundkörper eindrückbar ist.

Sehr vorteilhaft weist das Elektroelement ein Gehäuse auf, welches im Spreiz- oder im Grundkörper bzw. in der Bohrung formschlüssig gehalten ist.
Bei dem Elektroelement handelt es sich je nach Anwendung um einen Sensor, Aktor, Transducer, Chip, Messumformer oder dergleichen, wobei er mit wenigstens einem Leitungsanschluss versehen ist und/oder Funksignale sendet bzw. empfängt. Idealerweise ist das Elektroelement als autarkes Element ausgebildet.
Im Vergleich zu den heute am meisten verbreiteten Einbautechniken von Sensoren, welche geschraubt oder gesteckt werden, hat das erfindungsgemässe Befestigungselement den Vorteil, dass das Element einen dauerhaft dichten Sitz gewährleistet und so die Zuverlässigkeit und der Schutz gegen mechanische, klimatische oder chemische Belastungen erhöht. Auch ist die Kombination von Verschluss- und Sensorelement vorteilhafter in Bezug auf Grösse, Gewicht und Kosten.
Ausführungsbeispiele der Erfindung sowie weitere Vorteile derselben sind nachfolgend anhand einer Zeichnung näher erläutert. Es zeigen:
- Fig. 1: einen Schnitt eines nicht erfindungsgemässen einstückigen Elementes in einer Bohrung in nicht eingebautem Zustand;
- Fig. 2: einen Schnitt des Elementes nach Fig. 1 im montierten Zustand;
- Fig. 3: einen Schnitt eines erfindungsgemässen einstückigen Elementes in nicht eingebautem Zustand;
- Fig. 4: einen Schnitt des Elementes nach Fig. 3 im montierten Zustand;
- Fig. 5: einen Schnitt einer weiteren Variante eines nicht erfindungsgemässen Elementes mit einem im Grundkörper angeordneten Elektroelement im vormontierten Zustand;
- Fig. 6: einen Schnitt des Elementes nach Fig. 5 im montierten Zustand;
- Fig. 7: einen Schnitt einer weiteren Variante eines nicht erfindungsgemässen Elementes im montierten Zustand, bei dem das Elektroelement unterhalb des Elementes plaziert ist;
- Fig. 8: einen Schnitt einer Variante eines erfindungsgemässen Elementes im vormontierten Zustand;
- Fig. 9: einen Schnitt des Elementes nach Fig. 8 im montierten Zustand;
- Fig. 10: einen Schnitt eines Elementes einer ähnlichen Variante wie bei Fig. 8 in nicht eingebautem Zustand; und
- Fig. 11: einen Schnitt des Elementes nach Fig. 10 im montierten Zustand.

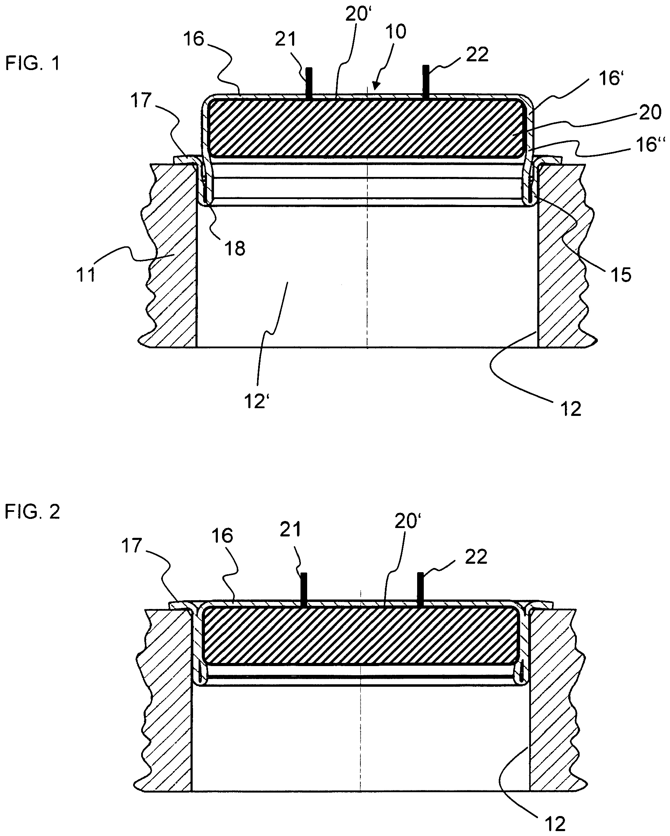

Fig. 1 und Fig. 2 zeigen ein Element 10, welches als Verschlusselement zum Einsetzen in eine Bohrung 12 eines Bauteils 11 dient, wobei es vorzugsweise in eine Bohrung eines Motors, eines Ventilblocks, eines Hydraulikaggregates oder eines Behälters eingesetzt wird.
Das Element 10 ist einstückig ausgebildet und setzt sich aus einem in die Bohrung 12 einsetzbaren hülsenförmigen Grundkörper 15, dessen Aussenumfang im eingebauten Zustand an der Innenfläche der Bohrung 12 dichtend anliegt, sowie aus einem diesen Grundkörper 15 in der Bohrung 12 verspannbaren Spreizkörper 16 zusammen. Der Grundkörper 15 mit einem am Bauteil 11 aufliegenden Stützflansch 17 ist durch einen umgebogenen Übergangsbereich 18 in dem in die Bohrung ragenden Ende mit dem Spreizkörper 16 verbunden. Ein im Spreizkörper 16 angeordnetes Elektroelement 20 ist vorgesehen, welches elektrische Signale sendet und/oder empfängt, hiefür zwei elektrische Anschlüsse 21, 22 angedeutet sind, die von ausserhalb des Bauteils 11 mit einer nicht näher gezeigten Auswerteeinheit oder dergleichen verbindbar sind. Das Elektroelement 20 weist ein Gehäuse 20' auf, welches im Innern des hutförmig ausgebildeten Spreizkörpers 16 vorzugsweise formschlüssig gehalten ist.
Das Elektroelement 20 ist, wie in Fig. 2 schematisch verdeutlicht ist, im montierten Zustand derart positioniert, dass es an die in der Bohrung 12 gebildeten Kammer 12' angrenzt und damit in Kontakt mit dem in der Bohrung enthaltenden Medium für Messzwecke oder dergleichen steht. Es befindet sich dabei im Spreizkörper 16 und auch innerhalb des Grundkörpers 15.
Selbstverständlich kann dieses vorliegend schematisch veranschaulichte Elektroelement 20 auch platten- oder andersförmig ausgebildet sein und seine elektrischen Anschlüsse 21, 22 können in der Anzahl bzw. in der Anordnung anders als dargestellt vorgesehen sein.
Je nach Anwendung ist für das Elektroelement 20 ein Sensor, Aktor, Transducer, Chip, Messumformer oder dergleichen verwendbar. Beispielsweise kann der Druck und/oder die Temperatur des Mediums in einem Motorenblock als Bauteil 11 permanent oder durch steuermässiges Abrufen ermittelt werden.

Das Elektroelement 20 in dem Spreizkörper 16 weist einen solchen Aussendurchmesser auf, dass dieser annähernd dem Innendurchmesser des Spreizkörpers 16 im montierten Zustand entspricht. Im nicht eingebauten Zustand ist in der Wandung 16' des Spreizkörpers 16 ein Übergang 16" ausgeformt, der die Wandung 16' in einen aussen- und einen innenseitigen Abschnitt unterteilt. Der Aussendurchmesser des aussenseitigen Abschnitts ist dabei grösser als der Aussendurchmesser des innenseitigen Abschnitts und insbesondere auch geringfügig grösser als der abgestufte Innendurchmesser des hülsenförmigen Grundkörpers 15, bei dem eine gegen die Bohrung 12 hin erfolgende Durchmesserverringerung vorgesehen ist. Damit wird ermöglicht, dass der Spreizkörper 16 beim Eindrücken als auch im montierten Zustand eine radial nach aussen wirkende dauerhafte Anpresskraft auf den Grundkörper 15 erzeugt.

Beim Eindrücken erfolgt fernerhin beim ringförmigen Übergangsbereich 18 eine plastische Umformung zwischen Spreiz- und Grundkörper, bei dem sich dieser wulstartige Übergangsbereich 18 in die Bohrung hinein verlagert.

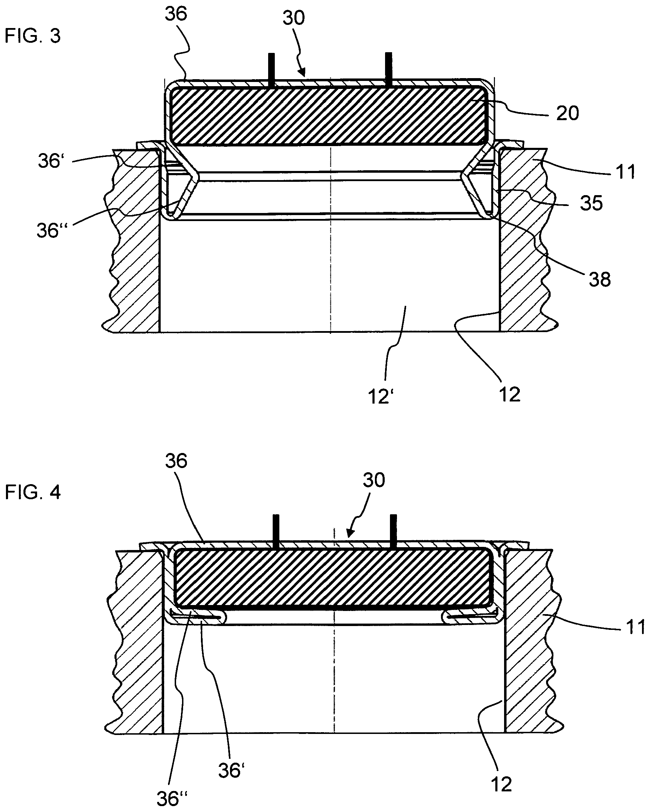

Fig. 3 und Fig. 4 veranschaulichen ein Element 30, welches ähnlich wie das Element 10 nach Fig. 1 und Fig. 2 ebenfalls einstückig ausgebildet ist und daher nachfolgend nurmehr die unterschiedliche Form seines Spreizkörpers 36 in dem zur Verformung gelangenden Bereich erläutert ist.

Ein Elektroelement 20 ist erfindungsgemäss in diesem Spreizkörper in analoger Weise wie beim Element 10 integriert.

Dem Spreizkörper 36 sind unterhalb des Elektroelementes 20 zwei im unmontierten Zustand, wie in Fig. 3 verdeutlicht ist, einen Winkel bildende hülsenförmige Schenkel 36', 36" zugeordnet. Beim Eindrücken des hutförmigen Spreizkörpers 36 wird der obere Schenkel 36' unterhalb des Elektroelementes 20, indes der untere Schenkel 36" beim Übergangsbereich 38 umgebogen. Im montierten Zustand sind sie folglich um 180° aufeinander liegend und dienen als unterer Anschlag des Elektroelementes 20. Letzteres ist damit wiederum in unmittelbarem Kontakt mit dem in der Kammer 12' befindenden Medium, und es lassen sich die Eigenschaften desselben, wie zum Beispiel Druck, Temperatur etc. messen.

Diese oben erläuterten Elemente 10, 30 sind in der Patentanmeldung PCT/EP2011/004225 ausführlich im Detail beschrieben und es wird daher auf diese Anmeldung verwiesen.

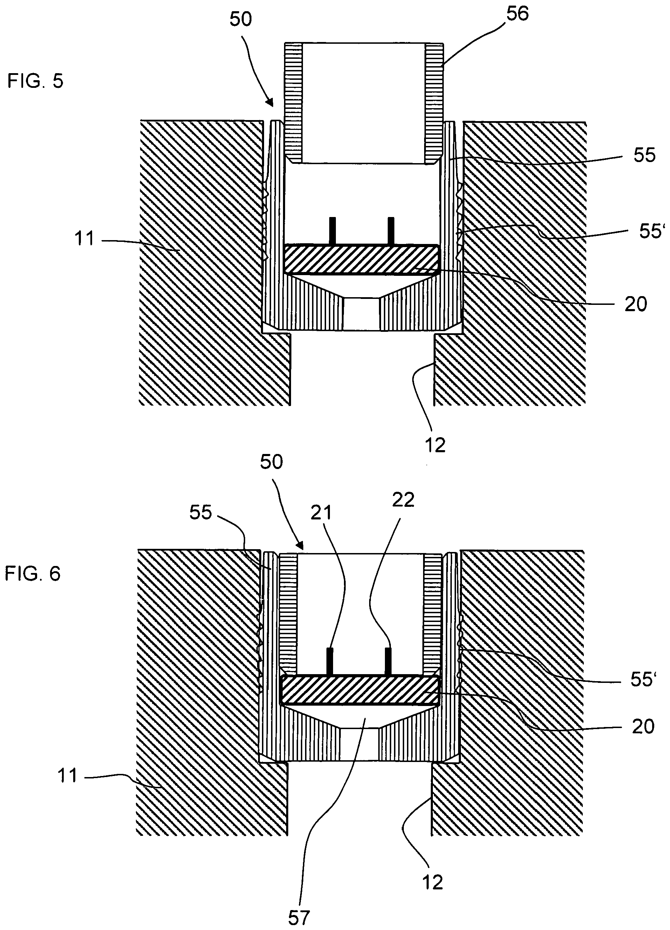

Ein Element 50 nach Fig. 5 und Fig. 6 umfasst einen in einer abgestuften Bohrung 12 positionierter Grundkörper 55 und einen in diesen eindrückbaren separaten hülsenförmigen Spreizkörper 56. Letzterer wird in der Weise eingedrückt, dass der Grundkörper 55 radial nach aussen gegen die Innenwand der Bohrung 12 gepresst und mit seinen vorstehenden ringförmigen Aussenrippen 55' oder dergleichen in das Material des Bohrungswandung unter plastischer Verformung für eine sicheres Halten und Abdichten eingedrückt ist.

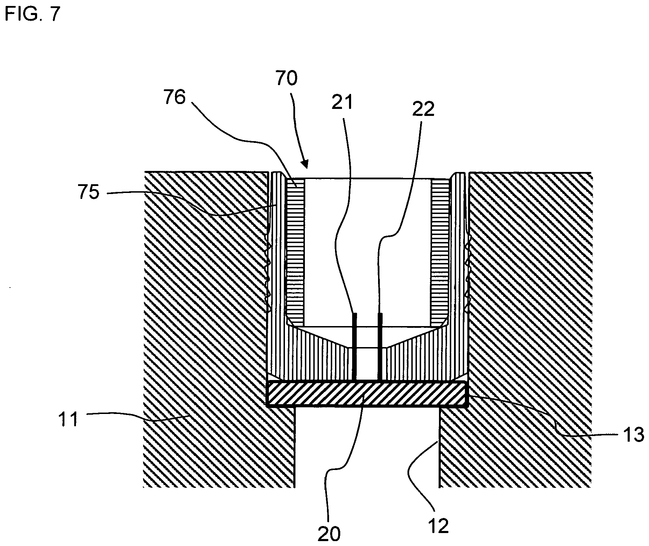

Dieses Element 50 zeichnet sich dadurch aus, dass das Elektroelement 20 im Unterschied zu den Ausführungsbeispielen gemäss Fig. 1 bis Fig. 4 in dem Grundkörper 55 angeordnet ist, welcher zweckmässigerweise ebenfalls hülsenförmig ausgebildet, so dass das in diesem befestigte Elektroelement 20 gleichsam mit dem in der Bohrung befindlichen Medium in Kontakt stehen kann. Die untere Öffnung 57 des Grundkörpers 55 ist vorzugsweise mit einer Trichterform versehen, damit das Elektroelement 20 vorteilhaft auf seiner gesamten Unterseite mit dem Medium beaufschlagt ist. Der in den Grundkörper 55 eingedrückte Spreizkörper 56 schlägt, wie in Fig. 6 ersichtlich ist, mit seiner unteren Stirnseite auf die Oberseite des Elektroelementes 20 an, womit letzteres dauerhaft fixiert ist.
Als Besonderheit ist noch vorgesehen, dass dem Elektroelement 20 eine Dichtfunktion dieses Verschlusselementes 50 zukommt, da sowohl der Spreiz- als auch der Grundkörper hülsenförmig ausgebildet sind. Damit ergibt sich der Vorteil, dass die Elektroanschlüsse 21, 22 des Elektroelementes 20 von aussen frei zugänglich sind. Im Prinzip könnte der Spreizkörper 56 aber auch oben geschlossen sein.
Ein Element 70 nach Fig. 7 ist an sich gleich ausgebildet wie das oben umschriebene Element 50 und es sind daher nachfolgend nicht nochmals alle Einzelheiten erläutert. Der Unterschied besteht darin, dass das Elektroelement 20 unterhalb des Elementes 70 direkt in der Bohrung fixiert ist. Zu diesem Zwecke ist die Bohrung 12 mit einer durch einen Absatz erweiterten Bohrung 13 versehen, in welcher das Elektroelement 20 passgenau positioniert ist. Als Fixierung desselben dient das in der erweiterten Bohrung 13 befestigte Element 70 mit dem Grundkörper 75 und dem darin eingedrückten Spreizkörper 76, die beide hülsenförmig ausgebildet sind und sich die Elektroanschlüsse 21, 22 für einen externe Verbindung durch diese erstrecken.

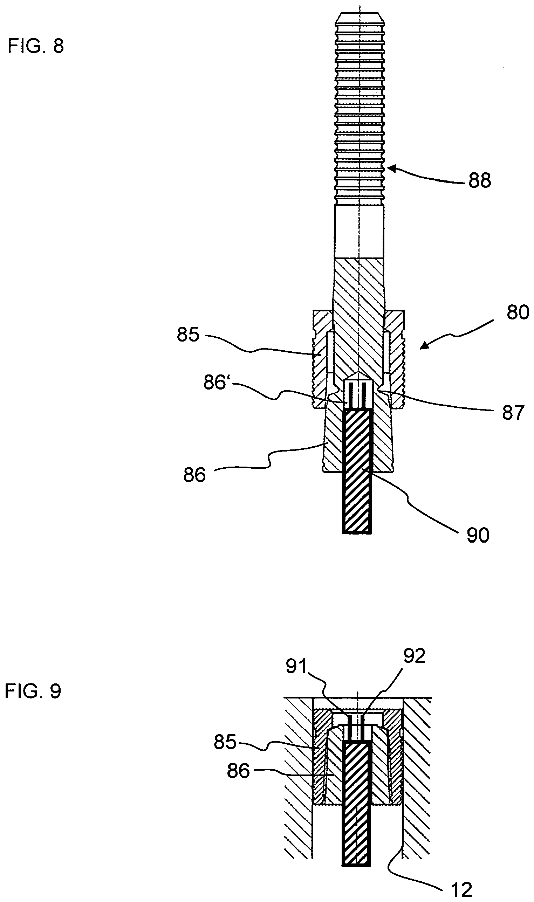

Fig. 8 und Fig. 9 zeigen ein weiteres Ausführungsbeispiel eines Elementes 80, welches einen Grundkörper 85 und einen Spreizkörper 86 umfasst, wobei der Spreizkörper 86 via eine Sollbruchstelle 87 mit einem Zugbolzen 88 verbunden ist. Der Spreizkörper 86 und der über diesen gestülpte Grundkörper 85 sind gemeinsam in der Bohrung 12 positionierbar. Durch eine Kraft auf den Zugbolzen 88 und damit auf den Spreizkörper 86 vom Bauteil 11 weg unter Abscheren der Sollbruchstelle 87 ist er in den Grundkörper 85 eindrückbar, so dass der Spreizkörper 86 durch Erzeugung eines radialen Druckes auf die Innenwand des Grundkörpers 85 letzteren gegen die Wand der zu verschliessenden Bohrung dichtend anpresst.

Im Rahmen der Erfindung ist ein ebenfalls schematisch gezeigtes Elektroelement 90 in einer Öffnung 86' des Spreizkörpers 86 angeordnet. Diese Öffnung 86' im Spreizkörper 86 für die Aufnahme des Elektroelementes weist eine solche Länge auf, dass diese sich durch die Sollbruchstelle 87 hindurch erstreckt und damit nach dem Abscheren eine durchgehende Öffnung im Spreizkörper 86 entsteht, wodurch das dicht im Spreizkörper 86 eingesetzte Elektroelement 90 gegen innen an die in der Bohrung 12 gebildeten Kammer angrenzt und gegen aussen wegführende Elektroanschlüsse 91, 92 aufweist.

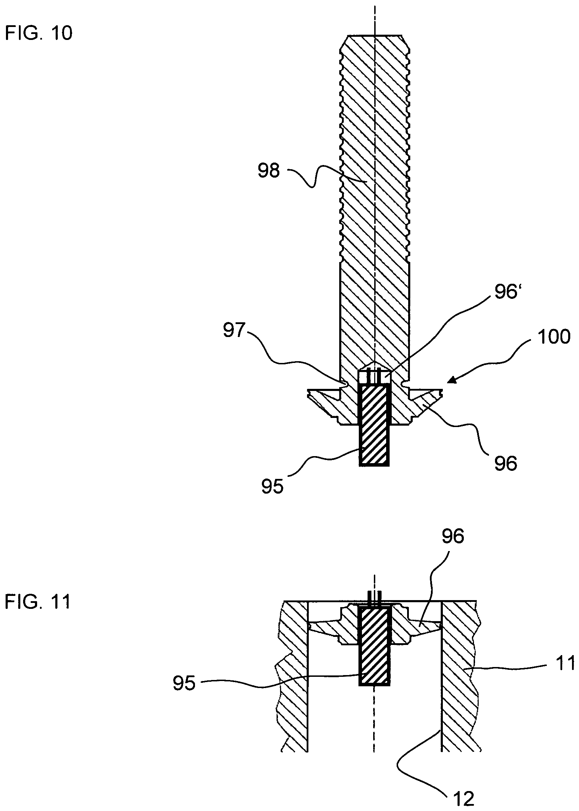

Fig. 10 und Fig. 11 veranschaulichen ein weiteres Ausführungsbeispiel eines Elementes 100, welches ähnlich wie dasjenige nach Fig. 8 eine Sollbruchstelle 97 einer einteiligen Verschlussscheibe 96 als Kopfteil eines auf Zug beanspruchbaren Zugbolzens 98 umfasst. Die Verschlussscheibe 96 ist durch eine axiale Kraft beim Zugbolzen 98 aufspreizbar und dabei radial gegen die Innenwand der zu verschliessenden Bohrung 12 des Bauteils 11 andrückbar.
Erfindungsgemäss ist ein Elektroelement 95 in einer Öffnung 96' der Verschlussscheibe 96 angeordnet, welches wiederum schematisch dargestellt ist. Diese Öffnung 96'für die Aufnahme des Elektroelementes weist eine solche Länge auf, dass sich diese durch die Sollbruchstelle 97 hindurch erstreckt und damit nach dem Abscheren eine durchgehende Öffnung in der Verschlussscheibe 96 entsteht, wodurch das dicht darin eingesetzte Elektroelement 95 gegen innen an die in der Bohrung 12 gebildeten Kammer angrenzt und gegen aussen wegführende Elektroanschlüsse aufweist.
Dieses oben erläuterte Verschlusselement 100 ist Gegenstand der Patentanmeldung WO 2012 107059 und es wird daher auf diese Anmeldung verwiesen.
Die Erfindung ist mit den oben erläuterten Ausführungsbeispielen ausreichend dargetan. Sie könnte aber noch durch andere Varianten geoffenbart sein. So könnten zwei oder noch mehr solcher Elektroelemente in einem Verschlusselement integriert sein, beispielsweise indem das eine Elektroelement im Grund- oder Spreizkörper integriert und das zweite unterhalb des Grundkörpers positioniert ist, wobei dieses auch ringförmig ausgebildet sein könnte. Das andere oberhalb diesem angeordneten könnte zylindrisch oder dergleichen ausgebildet sein, so dass ebenfalls eine Verbindung mit dem Innern des Motors etc. vorhanden wäre, um z.B. mit dem einen die Temperatur und mit dem andern den Druck des Mediums in der Kammer zu messen.

Des weiteren könnte das Elektroelement im montierten Zustand nicht unmittelbar an die in der Bohrung gebildeten Kammer angrenzen, sondern beispielsweise durch eine Leitung mit einer Sonde oder dergleichen in die Bohrung oder in den Innenraum des Bauteils ragen.

Ausserdem besteht im Rahmen der Erfindung ein weiterer Vorteil darin, dass das Elektroelement auswechselbar ist, wenn dieses defekt ist oder durch ein anderes ersetzt werden soll. So könnte zum Beispiel das Element 10, 30 gemäss Fig. 2 bzw. Fig. 4 durch eine Ausziehvorrichtung aus der Bohrung 12 entfernt und ein neues Element mit einem neuen Elektroelement montiert werden. Beim Element 80 könnte der Spreizkörper 86 mit dem Elektroelement 90 in die Bohrung hineingedrückt und dann ebenfalls nach dem Herausnehmen des Grundkörpers 85 ein neues Element mit einem neuen Elektroelement eingesetzt werden.

Üblicherweise ist die Bohrung 12, das jeweilige Element und damit auch das Elektroelement im Querschnitt rund ausgebildet. Theoretisch könnte bei diesen aber auch ein rechteckige oder mehreckiger Querschnitt vorgesehen sein.

## Patentansprüche

1. Element, insbesondere ein Verschluss- bzw. Befestigungselement zum Einsetzen in eine Bohrung (12) eines Bauteils (11), wie in eine Bohrung eines Motors, eines Ventilblocks, eines Hydraulikaggregates oder eines Behälters, wobei mindestens ein im oder am Element (30) angeordnetes Elektroelement (20) vorgesehen ist, wobei das jeweilige Elektroelement (20) elektrische Signale sendet und/oder empfängt, wobei ein in die Bohrung (12) einsetzbarer hülsenförmiger Grundkörper (35), dessen Aussenumfang im eingebauten Zustand an der Innenfläche der Bohrung (12) dichtend anliegt, ein diesen Grundkörper (35) in der Bohrung (12) verspannbarer Spreizkörper (36) sowie mindestens ein im oder am Grundkörper bzw. Spreizkörper angeordnetes Elektroelement (20) vorgesehen sind, **dadurch gekennzeichnet, dass** der Grund- (35) und Spreizkörper (36) einstückig ausgebildet sind, wobei der Grundkörper (35) durch einen umgebogenen Übergangsbereich (38) mit dem Spreizkörper (36) verbunden ist, wobei der Spreizkörper (36) einen nach innen abgewinkelten Verbindungsbereich zum Grundkörper mit einem unteren und einem oberen Schenkel (36', 36") aufweist, die derart geformt sind, dass die beiden Schenkel (36', 36") im eingepressten Zustand des Spreizkörpers (36) im Grundkörper (35) um 180° umgebogen aufeinander liegen und als unterer Anschlag des Elektroelementes (20) dienen.

2. Element, insbesondere ein Verschluss- bzw. Befestigungselement zum Einsetzen in eine Bohrung (12) eines Bauteils (11), wie in eine Bohrung eines Motors, eines Ventilblocks, eines Hydraulikaggregates oder eines Behälters, wobei mindestens ein im oder am Element (80) angeordnetes Elektroelement (90) vorgesehen ist, wobei das jeweilige Elektroelement (90) elektrische Signale sendet und/oder empfängt, wobei ein in die Bohrung (12) einsetzbarer hülsenförmiger Grundkörper (85), dessen Aussenumfang im eingebauten Zustand an der Innenfläche der Bohrung (12) dichtend anliegt, ein diesen Grundkörper (85) in der Bohrung (12) verspannbarer Spreizkörper (86) sowie mindestens ein im oder am Grundkörper bzw. Spreizkörper angeordnetes Elektroelement (90) vorgesehen sind, **dadurch gekennzeichnet, dass** der Grundkörper (85) und der via eine Sollbruchstelle (87) mit einem Zugbolzen (88) verbundene Spreizkörper (86) in der Bohrung (12) positionierbar ist, und dass durch eine Kraft auf den Zugbolzen (88) unter Abscheren der Sollbruchstelle (87) der Spreizkörper (86) in den Grundkörper (85) eindrückbar ist, so dass der Spreizkörper (86) durch Erzeugung eines radialen Druckes auf die Innenwand des Grundkörpers (85) letzteren gegen die Wand der zu verschliessenden Bohrung dichtend anpresst, wobei in einer Öffnung (86') im Spreizkörper (86) das Elektroelement (90) angeordnet ist.

3. Element, insbesondere ein Verschluss- bzw. Befestigungselement zum Einsetzen in eine Bohrung (12) eines Bauteils (11), wie in eine Bohrung eines Motors, eines Ventilblocks, eines Hydraulikaggregates oder eines Behälters, wobei mindestens ein im oder am Element (100) angeordnetes Elektroelement (95) vorgesehen ist, wobei das jeweilige Elektroelement (95) elektrische Signale sendet und/oder empfängt, **dadurch gekennzeichnet, dass**
das Element (100) eine Verschlussscheibe (96) und einen Zugbolzen (98) mit einer Sollbruchstelle (97) umfasst, wobei die Verschlussscheibe (96) durch eine axiale Kraft beim Zugbolzen (98) aufspreizbar und dabei radial gegen die Innenwand der zu verschliessenden Bohrung (12) andrückbar und der Zugbolzen (98) bei der Sollbruchstelle (97) von der Verschlussscheibe (6) lösbar ist, wobei ein Elektroelement (95) in einer Öffnung (96') der Verschlussscheibe (96) angeordnet ist.

4. Element nach Anspruch 1, 2 oder 3, **dadurch gekennzeichnet, dass**
das Elektroelement (20, 90, 95) im montierten Zustand derart positioniert ist, dass es an die in der Bohrung (12) gebildeten Kammer (12') angrenzt und damit in Kontakt mit dem in der Bohrung (12) enthaltenden Medium für Messzwecke oder dergleichen steht.

5. Element nach Anspruch 1 oder 2, **dadurch gekennzeichnet, dass** ein in die Bohrung (12) einsetzbarer hülsenförmiger Grundkörper (35, 85), dessen Aussenumfang im eingebauten Zustand an der Innenfläche der Bohrung (12) dichtend anliegt, ein diesen Grundkörper (35, 85) in der Bohrung (12) verspannbarer Spreizkörper (36, 86) sowie mindestens ein im oder am Grundkörper bzw. Spreizkörper angeordnetes Elektroelement (20, 90) vorgesehen ist.

6. Element nach Anspruch 1 oder 2, **dadurch gekennzeichnet, dass**
das Elektroelement (20, 90) im Spreizkörper (36, 86) integriert ist, wobei es ein Gehäuse aufweist, welches im Innern des Spreiz-, des Grundkörpers bzw. in der Bohrung formschlüssig gehalten ist.

7. Element nach einem der vorangehenden Ansprüche 1 bis 6, **dadurch gekennzeichnet, dass** für das Elektroelement (20, 90, 95) je nach Anwendung ein Sensor, Aktor, Transducer, Chip, Messumformer oder dergleichen verwendbar ist, welches mit wenigstens einem Leitungsanschluss (21, 22, 91, 92) versehen ist und/oder Funksignale sendet bzw. empfängt.

8. Element nach Anspruch 1, **dadurch gekennzeichnet, dass** das Elektroelement (20) in dem hutförmig ausgebildeten Spreizkörper (36) annähernd formschlüssig eingesetzt ist, wobei im montierten Zustand der Spreizkörper (36) mit dem Elektroelement (20) in der Bohrung (12) innerhalb des Grundkörpers (35) positioniert ist.

9. Element nach Anspruch 8, **dadurch gekennzeichnet, dass** das in dem hutförmig ausgebildeten Spreizkörper (36) enthaltende Elektroelement (20) einen solchen Aussendurchmesser aufweist, dass dieser annähernd dem Innendurchmesser des Spreizkörpers (36) im montierten Zustand entspricht, wobei im nicht eingebauten Zustand in der Wandung des Spreizkörpers (36) ein Übergangsbereich (38) ausgeformt ist, der die Wandung in einen aussenseitigen Abschnitt und einen innenseitigen Abschnitt unterteilt, wobei der Aussendurchmesser des aussenseitigen Abschnitts grösser als der Aussendurchmesser des innenseitigen Abschnitts und insbesondere auch geringfügig grösser als der abgestufte Innendurchmesser des hülsenförmigen Grundkörpers (35) ist.

10. Element nach Anspruch 2, **dadurch gekennzeichnet, dass** die Öffnung (86') im Spreizkörper (86) für die Aufnahme des Elektroelementes (90) eine solche Länge aufweist, dass diese sich durch die Sollbruchstelle (87) erstreckt und damit nach dem Abscheren eine durchgehende Öffnung (86') im Spreizkörper (86) entsteht, wodurch das dicht im Spreizkörper eingesetzte Elektroelement auf der einen Seite an die in der Bohrung (12) gebildeten Kammer angrenzt und auf der andern Seite nach aussen wegführende Elektroanschlüsse (91, 92) aufweist.

11. Element nach Anspruch 2, **dadurch gekennzeichnet, dass** dem Elektroelement (90) eine Dichtfunktion des Verschlusselementes (80) zukommt, bei dem der Spreiz- (86) als auch der Grundkörper (85) hülsenförmig ausgebildet sind.

## Claims

1. An element, in particular a closure or fastening element for inserting into a bore (12) in a component (11), such as into a bore in an engine, a valve block, a hydraulic unit or a container, whereby at least one electric element (20) which is arranged in or on the element (30) is provided, whereby the respective electric element (20) is transmitting and/or receiving electric signals, whereby a sleeve-shaped base body (35) that can be inserted into the bore (12), the outer circumference of which in the fitted state lies tight against the inner surface of the bore (12), a splaying body (36) that can brace this base body (35) in the bore (12) and at least one electric element (20) disposed in or on the base body or splaying body is provided, **characterised in that**
the base (35) and splaying body (36) are made in one piece, whereby the base body (35) being connected to the splaying body (36) by a bent crossover region (38), whereby the splaying body (36) has an inwardly angled connection region to the base body with a lower and an upper arm (36', 36") which are formed such that in the pressed in state of the splaying body (36) in the base body (35) the two arms (36', 36") lie on top of one another bent around 180° and serve as the lower stop of the electric element (20).

2. An element, in particular a closure or fastening element for inserting into a bore (12) in a component (11), such as into a bore in an engine, a valve block, a hydraulic unit or a container, whereby at least one electric element (90) which is arranged in or on the element (80) is provided, whereby the respective electric element (90) is transmitting and/or receiving electric signals, whereby a sleeve-shaped base body (85) that can be inserted into the bore (12), the outer circumference of which in the fitted state lies tight against the inner surface of the bore (12), a splaying body (86) that can brace this base body (85) in the bore (12) and at least one electric element (90) disposed in or on the base body or splaying body is provided, **characterised in that**
the base body (85) and the splaying body (86) connected to a tension bolt (88) via a predetermined breaking point (87) can be positioned in the bore (12), and that by applying a force to the tension bolt (88), when the predetermined breaking point (87) shears off the splaying body (86) can be pushed into the base body (85), so that the splaying body (86) is pressed tight against the wall of the bore to be closed by producing a radial pressure on the inner wall of the base body (85), whereby the electric element (90) being disposed in an opening (86) in the splaying body (86).

3. An element, in particular a closure or fastening element for inserting into a bore (12) in a component (11), such as into a bore in an engine, a valve block, a hydraulic unit or a container, whereby at least one electric element (95) which is arranged in or on the element (100) is provided, whereby the respective electric element (95) is transmitting and/or receiving electric signals, **characterised in that**
the element (100) comprises a closure disc (96) and a tension bolt (98) with a predetermined breaking point (97), the closure disc (96) being able to be splayed by an axial force in the tension bolt (98) and thereby being able to be pushed radially against the inner wall of the bore (12) to be closed and the tension bolt (98) being releaseable from the closure disc (6) at the predetermined breaking point (97), whereby an electric element (95) being disposed in an opening (96') of the closure disc (96).

4. The element according to Claim 1, 2 or 3, **characterised in that** in the fitted state the electric element (20, 90, 95) is positioned such that it is adjacent to the chamber (12') formed in the bore (12) and so is in contact with the medium contained in the bore (12) for measuring purposes or the like.

5. The element according to Claim 1 or 2, **characterised in that** a sleeve-shaped base body (35, 85) that can be inserted into the bore (12), the outer circumference of which in the fitted state lies tight against the inner surface of the bore (12), a splaying body (36, 86) that can brace this base body (35, 85) in the bore (12) and at least one electric element (20, 90) disposed in or on the base body or splaying body is provided.

6. The element according to Claim 1 or 2, **characterised in that** the electric element (20, 90) is integrated into the splaying body (36, 86), whereby it having a housing, which is held with form fit in the inside of the splaying or of the base body or in the bore.

7. The element according to any of the preceding Claims 1 to 6, **characterised in that**, depending on the application, a sensor, an actuator, a transducer, a chip, a measuring converter or the like can be used for the electric element (20, 90, 95), which is provided with at least one line connection (21, 22, 91, 92) and/or transmits or receives radio signals.

8. The element according to Claim 1, **characterised in that** the electric element (20) is inserted with more or less form fit into the splaying body (36) made in the form of a hat, whereby in the fitted state the splaying body (36) being positioned with the electric element (20) in the bore (12) within the base body (35).

9. The element according to Claim 8, **characterised in that** the electric element (20) contained in the splaying body (36) made in the form of a hat has an outer diameter such that the latter corresponds approximately to the inner diameter of the splaying body (36) in the fitted state, whereby in the non-installed state there being formed in the wall of the splaying body (36) a crossover (38) which divides the wall into an outside section and an inside section, whereby the outer diameter of the outside section being larger than the outer diameter of the inside section and in particular also being slightly larger than the graduated inner diameter of the sleeve-shaped base body (35).

10. The element according to Claim 2, **characterised in that** the opening (86') in the splaying body (86) for receiving the electric element (90) is of a length such that this opening extends through the predetermined breaking point (87) and so, after the shearing off, a continuous opening (86') is produced in the splaying body (86) by means of which the electric element inserted tightly into the splaying body is adjacent to the chamber formed in the bore (12) on the one side and has electric connections (91, 92) leading away to the outside on the other side.

11. The element according to Claim 2, **characterised in that** the electric element (90) performs a sealing function of the closure element (80), both the splaying body (86) and the base body (85) being made in the form of a sleeve.

## Revendications

1. Elément, notamment élément d'obturation ou de fixation à insérer dans un trou (12) d'un composant (11), comme un trou d'un moteur, d'un bloc-valve, d'un groupe hydraulique ou d'un récipient, dans lequel il est prévu au moins un électroélément (20) monté sur l'élément (30), l'électroélément (20) envoyant et/ou recevant des signaux électriques, dans lequel il est prévu une pièce (35) de base en forme de douille, qui peut être insérée dans le trou (12) et dont le pourtour extérieur s'applique, à l'état inséré, de manière étanche à la surface intérieure du trou (12), une pièce (36) d'étalement apte à déformer la pièce (35) de base dans le trou (12) ainsi qu'au moins un électroélément (20) monté ,dans ou sur la pièce de base ou la
pièces d'étalement, **caractérisé en ce que**
la pièce (35) de base et la pièce (36) d'étalement sont constituées d'une seule pièce, la pièce (35) de base étant reliée à la pièce (36) d'étalement par une région (38) de transition recourbée, la pièce (36) d'étalement ayant une région de liaison coudée vers l'intérieur par rapport à la pièce de base, en ayant une branche (36') inférieure et une branche (36'') supérieure, qui sont conformées de manière à ce que les deux branches (36', 36'') se trouvent l'une sur l'autre repliées à 180° à l'état comprimé de la pièce (36) d'écartement dans la pièce (35) de base et servent de butée inférieure à l'électroélément (20).

2. Elément, notamment élément d'obturation ou de fixation à insérer dans un trou (12) d'un composant (11), comme un trou d'un moteur, d'un bloc-valve, d'un groupe hydraulique ou d'un récipient, dans lequel il est prévu au moins un électroélément (90) monté sur l'élément (80), l'électroélément (90) envoyant et/ou recevant des signaux électriques, dans lequel il est prévu une pièce (85) de base en forme de douille, qui peut être insérée dans le trou (12) et dont le pourtour extérieur s'applique, à l'état inséré, de manière étanche à la surface intérieure du trou (12), une pièce (86) d'étalement apte à déformer la pièce (85) de base dans le trou (12) ainsi qu'au moins un électroélément (90) monté dans ou sur la pièce de base ou la
pièces d'étalement, **caractérisé en ce que**
la pièce (85) de base et la pièce (86) d'écartement reliée, par un point (87) destiné à se rompre, à un boulon (88) tirant, peuvent être mises en position dans le trou (12) et **en ce que**, par une force appliquée au boulon (88) tirant, en cisaillant le point (87) destiné à se rompre, la pièce (86) d'écartement peut être enfoncée dans la pièce (85) de base, de manière à appliquer la pièce (86) d'écartement, en produisant une pression radiale sur la paroi intérieure de la pièce (85) de base, cette dernière de manière étanche sur la paroi du trou à obturer, l'électroélément (90) étant disposé dans une ouverture (86') de la pièce (86) d'écartement.

3. Elément, notamment élément d'obturation ou de fixation à insérer dans un trou (12) d'un composant (11), comme un trou d'un moteur, d'un bloc-valve, d'un groupe hydraulique ou d'un récipient, dans lequel il est prévu au moins un électroélément (95) monté sur l'élément (100), l'électroélément (95) envoyant et/ou recevant des signaux électriques, **caractérisé en ce que** l'élément (100) comprend une rondelle (96) d'obturation et un boulon (98) tirant ayant un point (97) destiné à se rompre, la rondelle (96) d'obturation pouvant être écartée par une force axiale sur le boulon (98) tirant et s'appliquer ainsi sur la paroi intérieure du trou (12) à obturer et le boulon (98) tirant pouvant, au point (97) destiné à se rompre, être détaché de la rondelle (6) d'obturation, un électroélément (95) étant disposé dans une ouverture (96') de la rondelle (96) d'obturation.

4. Elément suivant la revendication 1, 2 ou 3, **caractérisé en ce que** l'électroélément (20, 90, 95) est, à l'état monté, mis en position, de manière à être voisin de la chambre (12') formée dans le trou (12) et être ainsi en contact, à des fins de mesure ou analogues, avec le milieu contenu dans le trou (12) .

5. Elément suivant la revendication 1 ou 2, **caractérisé en ce qu'**il est prévu une pièce (35, 85) de base en forme de douille, qui peut être insérée dans le trou (12) et dont le pourtour extérieur s'applique, à l'état monté, de manière étanche, à la surface inférieure du trou (12), une pièce (36, 86) d'écartement pouvant déformer cette pièce (35, 85) de base dans le trou (12), ainsi qu'au moins un électroélément (20, 90) monté dans ou sur la pièce de base ou la pièce d'écartement.

6. Elément suivant la revendication 1 ou 2, **caractérisé en ce que** l'électroélément (20, 90) est intégré à la pièce (36, 86) d'écartement, en ayant un boîtier maintenu à complémentarité de forme à l'intérieur de la pièce d'écartement, de la pièce de base ou dans le trou.

7. Elément suivant l'une des revendications précédentes 1 à 6, **caractérisé en ce que** l'on peut utiliser pour l'électroélément (20, 90, 95), respectivement suivant l'application, un capteur, un acteur, un transducteur, une puce, un transducteur de mesure ou analogue, qui est pourvu d'au moins une borne (21, 22, 91, 92) de connexion et/ou qui émet ou reçoit des signaux radio.

8. Elément suivant la revendication 1, **caractérisé en ce que** l'électroélément (20) est inséré à peu près, à complémentarité de forme, dans la pièce (36) d'écartement constituée en forme de chapeau, dans lequel, à l'état monté, la pièce (36) d'écartement est mise en position avec l'électroélément (20), dans le trou (12), à l'intérieur de la pièce (35) de base.

9. Elément suivant la revendication 8, **caractérisé en ce que** l'électroélément (20), contenu dans la pièce (36) d'écartement constituée en forme de chapeau, a un diamètre extérieur tel que celui-ci correspond à peu près au diamètre intérieur de la pièce (36) d'écartement à l'état monté, dans lequel, à l'état non monté, il est formé, dans la paroi de la pièce (36) d'écartement, une région (38) de transition qui subdivise la paroi en un segment du côté extérieur et en un segment du côté intérieur, le diamètre extérieur du segment du côté extérieur étant plus grand que le diamètre extérieur du segment du côté intérieur et notamment aussi légèrement plus grand que le diamètre intérieur étagé de la pièce (35) de base en forme de douille.

10. Elément suivant la revendication 2, **caractérisé en ce que** l'ouverture (86')dans la pièce (86) d'écartement a, pour la réception de l'électroélément (90), une longueur telle qu'elle passe par le point (87) destiné à se rompre et qu'il se fait ainsi, après le cisaillement, une ouverture (86') continue dans la pièce (86) d'écartement, grâce à quoi l'électroélément est inséré de manière étanche dans la pièce d'écartement et voisin d'un côté de la chambre formée dans le trou (12) et a, de l'autre côté, des bornes (91, 92) électriques s'éloignant vers l'extérieur.

11. Elément suivant la revendication 2, caractérisé à ce que l'électroélément (90) revient une fonction d'étanchéité de l'élément (80) d'obturation, dans lequel la pièce (86) d'écartement, tout comme la pièce (85) de base, sont constituées en forme de douille.
